# EUROPÄISCHE PATENTANMELDUNG

(11) **EP 1 086 806 A2**
(43) Veröffentlichungstag der Anmeldung: **28.03.2001**
(21) Anmeldenummer: 00120584.8
(22) Anmeldetag: 20.09.2000
(51) Int. Cl.: B32B 5/16, B65D 90/24

(54) **Abdichtungsbahn zum Abdichten beispielsweise von Auffangräumen oder Auffangwannen für wassergefährdende Stoffe**

(30) Priorität: 22.09.1999 DE 29916664 U
(71) Anmelder: Hellwig, Katja, 12205 Berlin (DE)
(72) Erfinder: Hellwig, Katja, 12205 Berlin (DE)
(74) Vertreter: Dantz, Jan Henning

(57) **Zusammenfassung**

Eine Abdichtungsbahn (4) zum Abdichten von beispielsweise Auffangräumen oder Auffangwannen von wassergefährdeten Stoffen umfaßt eine Trägerbahn (5) und eine damit verbundene Beschichtung (6) aus Polysulfid. Erfindungsgemäß besteht die Trägerbahn (5) aus kunststoffgebundenem Granulat und ist sowohl porös wie auch federelastisch. Durch die Verlegung der Abdichtungsbahn kann eine sichere und zuverlässige Abdichtung von Auffangräumen erhalten werden, ohne daß hierfür zeitaufwendige Vorarbeiten erforderlich sind. Die Abdichtungsbahn (4) kann nahezu auf jedem Untergrund verlegt werden, wobei auch Risse und Unebenheiten überbrückt werden können.

## Beschreibung

Die vorliegende Erfindung betrifft eine Abdichtungsbahn zum Abdichten bspw. von Auffangräumen oder Auffangwannen für wassergefährdende Stoffe, umfassend eine Trägerbahn und eine damit verbundene Beschichtung aus Polysulfid.

Sowohl aus Gründen des Umweltschutzes wie auch aufgrund einschlägiger baulicher Vorschriften müssen bspw. Auffangräume oder Auffangwannen für wassergefährdende Stoffe innenseitig vollkommen abgedichtet sein.

Unter Auffangräumen oder Auffangwannen sind in Zusammenhang mit der vorliegenden Erfindung solche Räume zu verstehen, in denen bspw. Vorratsbehälter für petrochemische Erzeugnisse wie Benzin, Öl oder dergl. oder Behälter für Chemikalien installiert sind, darüberhinaus aber auch solche Räume, in denen sich Abfüllstationen, Mischeinrichtungen oder Produktionsanlagen befinden, in denen mit wassergefährdenden Stoffen gearbeitet wird.

Derartige Auffangräume oder Auffangwannen sind in der Regel aus Beton oder aus Mauerwerk erstellt, wobei im letzten Falle eine Auskleidung mit Estrich und / oder Mörtel erfolgt.

Für die umweltsichere Abdichtung sind die vorstehend beschriebenen Maßnahmen in keinem Falle ausreichend, so daß zusätzliche Maßnahmen für eine einwandfreie und den baulichen Vorschriften entsprechende Abdichtung ergriffen werden müssen.

Bei älteren Auffangräumen oder Auffangwannen, die zu Zeiten weniger strenger baulicher Auflagen erstellt wurden oder bei schon lange genutzten Auffangräumen oder Auffangwannen kann eine nachträgliche Abdichtung oder Renovierung erforderlich sein.

Es sind Abdichtungsbahnen der gattungsgemäßen Art bekannt, bei denen die Trägerbahn aus alternativ dünnen Schichten besteht.

Die Abdichtung von Auffangräumen oder Auffangwannen mit derartigen Abdichtungsbahnen erfordert bauseitig ein hohes Maß an Vorarbeiten, bspw. in der Form, daß Risse vor dem Auslegen der Abdichtungsbahnen geschlossen werden müssen. Es ist auch bekannt, die abzudichtenden Flächen entsprechender Auffangräume oder Auffangwannen unmittelbar mit Dichtmaterialien zu beschichten.

Diese Maßnahme wird als besonders ungünstig angesehen, da in jedem Falle mehrere Schichten aufzubringen sind und zwischen dem Aufbringen verschiedener Schichten relativ lange Wartezeiten in Kauf genommen werden müssen. Außerdem sind diese Arbeiten bei offenen Auffangräumen wetterabhängig. Dies sind nur einige Nachteile, die mit einer derartigen Methode der Abdichtung verbunden sind.

Der vorliegenden Erfindung liegt die Aufgabe zugrunde, eine Abdichtungsbahn der gattungsgemäßen Art zu schaffen, die eine sichere und zuverlässige Abdichtung von Auffangräumen oder dergl. ermöglicht, ohne daß hierfür unangemessen zeitaufwendige und somit teure Vorarbeiten erforderlich sind.

Diese Aufgabe wird erfindungsgemäß dadurch gelöst, daß die Trägerbahn aus kunststoffgebundenem Granulat besteht und sowohl porös wie auch federelastisch ist.

Eine derartige Abdichtungsbahn kann auf nahezu jedem Untergrund verlegt werden, ohne daß hier nennenswerte Vorarbeiten wie Ausgleichs-Spachtelungen, der Auftrag von Estrich oder dergl. erforderlich ist.

Auch nicht allzu große Risse im Untergrund werden mit einer erfindungsgemäßen Abdichtungsbahn problemlos überbrückt.

Durch die Porosität der Trägerbahn ist diese in der Lage, untergrundseitig vorhandenen Restfeuchtigkeit aufzunehmen, ohne daß hierdurch die Wirksamkeit der Abdichtung in Frage gestellt ist. Die Trägerbahn wirkt insoweit auch als Dampfentspannungsschicht.

Es hat sich herausgestellt, daß als Bindemittel für das Granulat Polyurethan besonders vorteilhaft ist.

Das Granulat besteht zweckmäßigerweise aus Kautschuk, Gummi oder vergleichbaren, gummiartigen Materialien.

Dabei wird die Verwendung eines Granulates aus recycelten Kautschukprodukten wie z.B. Autoreifen oder dergl. bevorzugt.

Die Dicke der Trägerschicht ist vorteilhafterweise deutlich größer als die Dicke der abdichtenden Beschichtung aus Polysulfid.

Als praxisgerecht hat sich eine Dicke der Trägerschicht im Bereich von mindestens sechs bis zwölf Millimeter gezeigt.

Die Dicke der abdichtenden Beschichtung liegt vorteilhafterweise etwa im Bereich zwischen einem und drei Milllimetern.

Ein Ausführungsbeispiel der Erfindung ist in der beigefügten Zeichnung dargestellt und wird im Folgenden näher beschrieben.

Es zeigt:
- Figur 1: einen schematisch dargestellten Vertikalschnitt durch einen durch erfindungsgemäße Abdichtungsbahnen abgedichteten Auffangraum
- Figur 2: eine vergrößerte Schnittdarstellung durch eine Abdichtungsbahn gemäß vorliegender Erfindung.

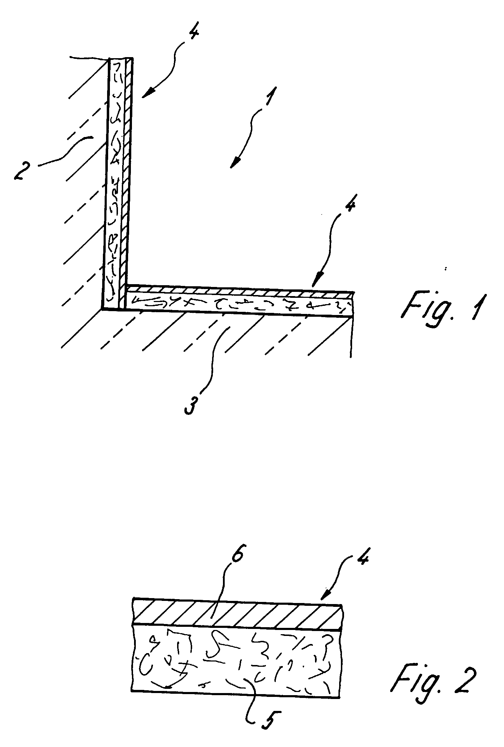

In Figur 1 ist mit dem Bezugszeichen 1 ein Auffangraum für wassergefährdende Stoffe bezeichnet, dessen Wandungsbereich 2 ebenso wie dessen Bodenbereich 3 durch erfindungsgemäße Abdichtungsbahnen 4 abgedichtet ist.

Ein vergrößerter Querschnitt durch eine derartige Abdichtungsbahn ist in Figur 2 gezeigt. Aus Figur 2 geht deutlich hervor, daß die Abdichtungsbahn 4 aus einer Trägerbahn 5 sowie einer damit verbundenen Beschichtung 6 aus Polysulfid besteht.

Die Trägerbahn 5 besteht erfindungsgemäß aus kunststoffgebundenem Granulat und ist sowohl porös wie auch federelastisch.

Als Bindemittel für das Granulat der Trägerbahn 5 ist bevorzugt Polyurethan verwendet.

Das zur Herstellung der Trägerbahn 5 verwendete Granulat besteht aus Kautschuk, Gummi oder aus ähnlichen gummiartigen Materialien, bevorzugt aber aus recycelten Kautschukprodukten, wie z.B. Autoreifen oder dergl..

Wie aus Figur 2 weiterhin deutlich hervorgeht, übersteigt die Dicke der Trägerschicht 5 deutlich die Dicke der abdichtenden Beschichtung 6.

In der Praxis hat sich eine Dicke der Trägerschicht 5 im Bereich von mindesten sechs bis zwölf Millimetern als äußerst zweckmäßig herausgestellt. Dabei sollte die Dicke der abdichtenden Beschichtung 6 etwa im Bereich zwischen einem und drei Millimetern liegen.

Erfindungsgemäße Abdichtungsbahnen 4 können industriell vorgefertigt und aufgrund ihrer Elastizität auch bequem aufgerollt werden.

Ebenso ist es natürlich denkbar, die Abdichtungsbahnen 4 erst bauseitig zu erstellen.

Bei Bedarf können erfindungsgemäße Abdichtungsbahnen 4 untergrundseitig punktuell oder ähnlich verklebt werden, insbesondere wenn mit hohen Windbelastungen zu rechnen ist.

Nebeneinander liegende Abdichtungsbahnen sollten eine Trennfuge aufweisen, um einen Längenausgleich bei thermischen Belastungen zu ermöglichen. Die Trennfuge wird dann mit dem gleichen Material (Polysulfid) ausgefüllt, aus dem auch die abdichtende Beschichtung 6 besteht.

Mit einer erfindungsgemäßen Abdichtungsbahn 4 sind alle Anforderungen erfüllt, die sowohl unter dem Gesichtspunkt einschlägiger Bauvorschriften wie auch unter wirtschaftlichen Gesichtspunkten zu sehen und zu beachten sind.

## Patentansprüche

1. Abdichtungsbahn zum Abdichten von bspw. Auffangräumen oder Auffangwannen für wassergefährdende Stoffe, umfassend eine Trägerbahn und eine damit verbundene Beschichtung aus Polysulfid, **dadurch gekennzeichnet, daß** die Trägerbahn (5) aus kunststoffgebundenem Granulat besteht und sowohl porös wie auch federelastisch ist.

2. Abdichtungsbahn nach Anspruch 1, **dadurch gekennzeichnet, daß** als Bindemittel für das Granulat Polyurethan verwendet ist.

3. Abdichtungsbahn nach Anspruch 1 oder 2, **dadurch gekennzeichnet, daß** das Granulat aus Kautschuk, Gummi oder ähnlichen gummiartigen Materialien besteht.

4. Abdichtungsbahn nach Anspruch 3, **dadurch gekennzeichnet, daß** das Granulat vorzugsweise aus recycelten Kautschukprodukten wie z.B. Autoreifen oder dergl. besteht.

5. Abdichtungsbahn nach einem oder mehreren der vorangehenden Ansprüche, **dadurch gekennzeichnet, daß** die Dicke der Trägerschicht (5) die Dicke der abdichtenden Beschichtung 6 deutlich übersteigt.

6. Abdichtungsbahn nach einem der vorhergehenden Ansprüche, **dadurch gekennzeichnet, daß** die Dicke der Trägerschicht (5) mindestens sechs bis zwölf Millimeter beträgt.

7. Abdichtungsbahn nach einem der vorhergehenden Ansprüche, **dadurch gekennzeichnet, daß** die Dicke der abdichtenden Beschichtung (6) etwa ein bis drei Millimeter beträgt.
